(19) **Europäisches Patentamt**
**European Patent Office**
**Office européen des brevets**

(11) **EP 1 758 768 B1**

(12) **EUROPÄISCHE PATENTSCHRIFT**

(45) Veröffentlichungstag und Bekanntmachung des Hinweises auf die Patenterteilung:
**25.01.2012 Patentblatt 2012/04**

(21) Anmeldenummer: 05726242.0

(22) Anmeldetag: **12.04.2005**

(51) Int Cl.:
*B60R 21/013* (2006.01)   *B60R 21/0132* (2006.01)
*B60R 21/015* (2006.01)

(86) Internationale Anmeldenummer:
**PCT/EP2005/051603**

(87) Internationale Veröffentlichungsnummer:
**WO 2005/123460 (29.12.2005 Gazette 2005/52)**

(54) **VERFAHREN ZUR BESTIMMUNG EINER AUSLÖSEENTSCHEIDUNG FÜR RÜCKHALTEMITTEL EINES KRAFTFAHRZEUGES**

METHOD FOR DETERMINING A DECISION FOR TRIGGERING RETAINING MEANS IN A MOTOR VEHICLE

PROCEDE DE PRISE DE DECISION DU DECLENCHEMENT DE MOYENS DE RETENUE DANS UN VEHICULE AUTOMOBILE

(84) Benannte Vertragsstaaten:
**DE ES FR GB**

(30) Priorität: **17.06.2004 DE 102004029374**

(43) Veröffentlichungstag der Anmeldung:
**07.03.2007 Patentblatt 2007/10**

(73) Patentinhaber: **ROBERT BOSCH GMBH**
**70442 Stuttgart (DE)**

(72) Erfinder:
• **LICH, Thomas**
  **71409 Schwaikheim (DE)**
• **SCHMID, Michael**
  **70806 Kornwestheim (DE)**
• **KROENINGER, Mario**
  **77815 Buehl (DE)**

(56) Entgegenhaltungen:
EP-A- 1 002 709     DE-A1- 10 149 112
DE-A1- 19 910 596     DE-C1- 19 632 836

EP 1 758 768 B1

**Beschreibung**

STAND DER TECHNIK

Die vorliegende Erfindung betrifft ein Verfahren zur Bestimmung einer Auslöseentscheidung für Rückhaltemittel eines Kraftfahrzeuges bei einem vorangegangenen Schleudermanöver.

In der Druckschrift DE 10149 112 A1 ist ein Verfahren zur Bestimmung einer Auslöseentscheidung für Rückhaltemittel in einem Fahrzeug beschrieben. Bei diesem Verfahren wird in Abhängigkeit eines Schwimmwinkels, einer Fahrzeugquergeschwindigkeit und eines Fahrzeugkippwinkels eine Auslöseentscheidung bestimmt. Der Fahrzeugkippwinkel wird hier durch eine Fahrzeugquerbeschleunigung und/oder eine Fahrzeugquergeschwindigkeit charakterisiert. Zusätzlich können bei diesem Verfahren noch Insassenerkennungsmerkmale verwendet werden.

Aus der EP 1 002 709 A2 ist bekannt ein Verfahren gemäß dem Oberbegriff des Anspruchs 1 und eine Methode zur Bestimmung eines Schwimmwinkels eines Fahrzeugs. Gemäß einer Ausführungsform der Vorrichtung misst ein Schwimmratensensor die Schwimmrate eines Fahrzeugs und ein Beschleunigungssensor erfasst die Längs- und Querbeschleunigung des Fahrzeugs. Eine Abschätzung des Schwimmwinkels wird erstellt und aktualisiert mit einer Funktion der erfassten Schwimmwinkelrate. Ein beschleunigungsbasierter Schwimmwinkel wird bestimmt mit einer Funktion der gemessenen Beschleunigung und ein Mischkoeffizient wird bereitgestellt. Eine aktuelle Fahrzeugschwimmwinkelabschätzung wird erstellt mit einer Funktion der aktualisierten Schwimmwinkelabschätzung, des beschleunigungsbasierten Schwimmwinkels und dem Mischkoeffiziente, gemäß einer zweiten Ausführungsform werden sowohl eine Rollwinkelabschätzung als auch eine Nickwinkelabschätzung berechnet.

VORTEILE DER ERFINDUNG

Gemäß der Erfindungs wird zum Bestimmen der Auslöseentscheidung weiter ein Eintrittswinkel bereitgestellt und verwendet, welcher den Eintritt des Fahrzeuges von einem ersten Untergrund in einen zweiten Untergrund während des Schleudervorgangs festlegt und welcher mittels des Schwimmwinkels berechnet wird. Die dabei dem Fahrzeug zur Verfügung stehende Energie wird kontinuierlich berechnet. Diese setzt sich aus kinetischer und rotatorischer Energie zusammen. Beim Eintreten des Kraftfahrzeuges beispielsweise von der Fahrbahn in einen Grün- oder Seitenstreifen ergeben sich erhöhte laterale Beschleunigungen, welche ein Indiz für eine auftretende Verzögerung darstellen. Mit Hilfe der Integration der lateralen Beschleunigung wird die abgebaute Energie berechnet. Die Differenz zwischen der im Vorfeld berechneten Gesamtenergie und der abgebauten Energie dient als Eingang für eine parametrisierbare Tabelle, aus welcher sich dann die Wahrscheinlichkeit für einen Überrollvorgang generieren lässt. Des Weiteren lässt sich aus einer solchen parametrisierbaren Tabelle eine Auslösezeit für das jeweilige Rückhaltemittel generieren.

eine Gierrate des Fahrzeuges direkt in die Bestimmung der Auslöseentscheidung für Rückhaltemittel mit ein. Die Gierrate ist definiert durch die Drehgeschwindigkeit um die Hochachse des Fahrzeuges, gemessen in Grad pro Sekunde. Durch die Berücksichtigung der Gierrate bei der Bestimmung der Auslöseentscheidung für Rückhaltemittel können sowohl die kinetische Energie als auch die Rotationsenergie berechnet werden, die bei einem potentiellen Überrollvorgang des Fahrzeuges zur Verfügung stehen würden. Des Weiteren ist es ein Vorteil des erfindungsgemäßen Verfahrens, dass nur Informationen für die Bestimmung der Auslöseentscheidung verwendet werden, die bereits innerhalb des Fahrzeuges vorhanden sind. Die Gierrate steht beispielsweise durch das ESP-System (ESP=Electronic Stability Program) oder einem anderen System zur Fahrzeugdynamikregelung (z.B. DSC, VDC) zur Verfügung. Damit wird ein Mehrnutzen für die Sensorik generiert und Kosten für weitere spezielle Sensorik werden gespart.

Ein wesentlicher Vorteil ist auch der damit verbesserte Insassenschutz, da die Rückhaltemittel situationsangepasst ausgelöst werden können und damit eine bessere zeitliche Abstimmung zum Unfallvorgang erfolgen kann. Ein weiterer wesentlicher Vorteil der situationsangepassten Bestimmung von Auslöseentscheidungen mittels der Gierrate ist, dass nicht nur Auslösungen bei Überrollvorgängen, sondern auch Auslösungen im Front- und Seitenbereich optimiert werden können.

Die der vorliegenden Erfindung zugrundeliegende Idee besteht im Wesentlichen darin, ein Verfahren zur Bestimmung einer Auslöseentscheidung für Rückhaltemittel eines Kraftfahrzeuges bei einem vorangegangenen Schleudermanöver bereitzustellen, wobei vorerst eine Gierrate, ein erster Fahrdynamikparametersatz und ein Kontextparametersatz bereitgestellt werden und wobei dann die Auslöseentscheidung mittels der Gierrate, des ersten Fahrzeugparametersatzes und des Kontextparametersatzes bestimmt wird.

In den Unteransprüchen finden sich vorteilhafte Weiterbildungen und Ausgestaltungen des in Anspruch 1 angegebenen Verfahrens zur Bestimmung einer Auslöseentscheidung für Rückhaltemittel eines Kraftfahrzeuges bei einem vorangegangenen Schleudermanöver.

Gemäß einer bevorzugten Weiterbildung weist der erste Fahrdynamikparametersatz eine Lateralbeschleunigung und eine Längsgeschwindigkeit des Kraftfahrzeuges auf.

Gemäß einer weiteren bevorzugten Weiterbildung weist eine Erweiterung des ersten Fahrdynamikparametersatzes weiter einen Lenkwinkel, eine Längsbeschleunigung, eine Hochbeschleunigung und eine Wankrate des Kraftfahrzeugs auf.

Gemäß einer weiteren bevorzugten Weiterbildung weist der Kontextparametersatz jeweils einen Gewichtsparameter, einen Größenparameter und/oder einen Positionsparameter für einen jeden Fahrzeuginsassen auf. Ein Vorteil dieser bevorzugten Weiterbildung ist, dass die Auslösung von Rückhaltemitteln für den jeweiligen Fahrzeuginsassen individualisiert bestimmbar ist. Dies ist wichtig, da beispielsweise für ein Baby oder einen Erwachsenen verschiedene Rückhaltemittel unterschiedlich eingesetzt werden müssen.

Gemäß einer weiteren bevorzugten Weiterbildung wird das Bestimmen der Auslöseentscheidung mittels des ersten Fahrdynamikparametersatz und der Gierrate durchgeführt.

gemäß einer weiteren bevorzugten Weiterbildung wird zum Bestimmen der Auslöseentscheidung weiter ein Schwimmwinkel bereitgestellt und verwendet. Vorteilhafterweise kann die von herkömmlichen Lösungen bekannte Nutzung des Schwimmwinkels auch für das erfinderische Verfahren genutzt werden. Im Weiteren ist es möglich, dass der Schwimmwinkel mittels einer Sensoreinrichtung direkt gemessen und als Größe zur Verfügung gestellt wird.

Gemäß einer weiteren bevorzugten Weiterbildung wird der Schwimmwinkel mittels des ersten Fahrdynamikparametersatzes berechnet Vorteilhafterweise steht somit ein weiterer Parameter zur Verfeinerung der Bestimmung der Auslöseentscheidung zur Verfügung. Der Einsatz eines teuren Schwimmwinkelsensors ist nicht notwendig, da der Schwimmwinkel aus dem ersten Fahrdynamikparametersatz berechenbar ist.

Gemäß einer weiteren bevorzugten Weiterbildung wird weiter zum Bestimmen der Auslöseentscheidung eine Lateralgeschwindigkeit des Fahrzeuges bereitgestellt und verwendet, welche mittels des ersten Fahrdynamikparametersatzes berechnet wird. Somit steht ein weiterer Parameter zur Verfeinerung der Bestimmung der Auslöseentscheidung zur Verfügung, ohne einen weiteren zusätzlichen Sensor aufwenden zu müssen. Dadurch werden Kosten und ein integratorischer Mehraufwand eingespart. Alternativ kann bei einem Einsatz einer Sensoreinrichtung zur Bestimmung des Schwimmwinkels aus diesem die Lateralgeschwindigkeit ermittelt und zur Verfügung gestellt werden.

Gemäß einer weiteren bevorzugten Weiterbildung wird zum Bestimmen der Auslöseentscheidung eine Überrollwahrscheinlichkeit für das Kraftfahrzeug bereitgestellt und verwendet, welche mittels der Gierrate, der Lateralgeschwindigkeit und des Schwimmwinkels berechnet wird.

Gemäß einer weiteren bevorzugten Weiterbildung werden die Gierrate, der erste Fahrdynamikparametersatz, der Kontextparametersatz, der Schwimmwinkel, der Eintrittswinkel, die Lateralgeschwindigkeit und die Überrollwahrscheinlichkeit mittels eines Datenbusses innerhalb des Fahrzeuges für eine Rückhaltmittelauslöseeinheit bereitgestellt. Die Rückhaltemittelauslöseeinheit bestimmt die Auslöseentscheidung und löst damit die entsprechenden Rückhaltemittel aus. Beispielsweise ist der Datenbus als ein CAN-Bus und die Rückhaltemittelauslöseeinheit ist als ein Airbag-Steuersystem ausgebildet. Ein Vorteil dieser bevorzugten Weiterbildung ist, dass alle Parameter inhärent im System Fahrzeug bereits vorhanden sind und damit keine neuen Sensoren vonnöten sind. Dadurch werden Kosten und ein hoher integratorischer Aufwand eingespart.

Gemäß einer weiteren bevorzugten Weiterbildung wird wenigstens eines der Rückhaltemittel, Gurtstraffer, Überrollbügel, ausfahrbare Kopfstützen und/oder einer oder mehrere Airbags von der Rückhaltemittelauslöseeinheit mittels der bestimmten Auslöseentscheidung ausgelöst Auch reversible Rückhaltemittel können durch die Rückhaltemittelauslöseeinheit mittels der bestimmten Auslöseentscheidung ausgelöst werden. Beispiele für verschiedene Airbags sind Kopf-Airbag, Seiten-Airbag und Front-Airbag. Beispiele für reversible Rückhaltemittel sind reversible Gurtstraffer. Vorteilhafterweise kann somit mittels der Auslöseentscheidung bzw. mittels der Auslöseentscheidungen adaptiv und selektiv bestimmt werden, welche Rückhaltemittel ausgelöst werden. Adaptiv mit Bezug auf die Fahrsituation, in welcher sich das Fahrzeug befindet, und auf die Fahrzeuginsassen, insbesondere auf die Kontextparameter, Gewichtsparameter, Größenparameter und Positionsparameter, und selektiv mit Bezug auf die Auswahl der Rückhaltemittel wird die Auslöseentscheidung bestimmt.

Gemäß einer weiteren bevorzugten Weiterbildung wird das Bestimmen der Auslöseentscheidung mittels des Kontextparametersatzes, der Lateralgeschwindigkeit, des Eintrittswinkels und der Gierrate durchgeführt.

ZEICHNUNGEN

Ausführungsbeispiele der Erfindung sind in den Zeichnungen dargestellt und in der nachfolgenden Beschreibung näher erläutert.

Es zeigen:

Figur 1      ein schematisches Blockschaltbild eines ersten Ausführungsbeispieles zum erfindungsgemäßen Bestimmen einer Auslöseentscheidung für Rückhaltemittel;

Figur 2a     ein schematisches Blockschaltbild des ersten Fahrdynamikparametersatzes zur Erläuterung der Ausführungsbeispiele ;

Figur 2b     ein schematisches Blockschaltbild einer Erweiterung des ersten Fahrdynamikparametersatzes zur Erläuterung der Ausführungsbeispiele;

Figur 3      ein schematisches Blockschaltbild des Kontextparametersatzes zur Erläuterung der Ausführungsbeispiele;

Figur 4    ein schematisches Blockschaltbild eines zweiten Ausführungsbeispieles zum erfindungsgemäßen Bestimmen einer Auslöseentscheidung für Rückhaltemittel; und

Figur 5    ein schematisches Blockschaltbild eines dritten Ausführungsbeispieles zum erfindungsgemäßen Bestimmen einer Auslöseentscheidung für Rückhaltemittel.

BESCHREIBUNG DER AUSFÜHRUNGSBEISPIELE

In den Figuren bezeichnen gleiche Bezugszeichen gleiche oder funktionsgleiche Bestandteile.

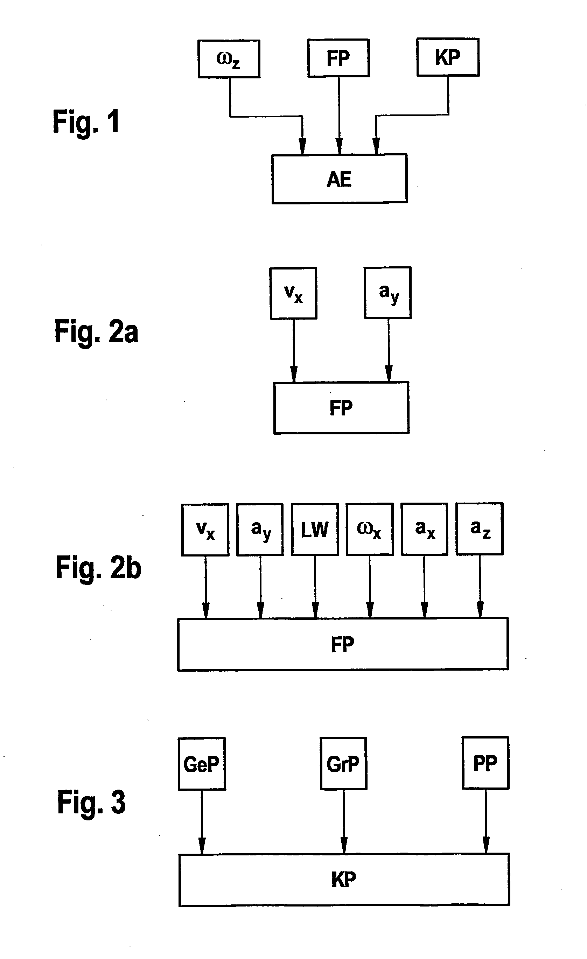

Figur 1 zeigt ein schematisches Blockschaltbild eines ersten Ausführungsbeispieles zum erfindungsgemäßen Bestimmen einer Auslöseentscheidung für Rückhaltemittel eines Kraftfahrzeuges bei einem vorangegangenen Schleudermanöver. Gemäß Figur 1 werden ein erster Fahrdynamikparametersatz FP, ein Kontextparametersatz KP und eine Gierrate au bereitgestellt. Die Gierrate $\omega_z$ ist definiert durch die Drehgeschwindigkeit des Fahrzeuges um seine Hochachse, gemessen in Grad pro Sekunde. Die Gierrate $\omega_z$, der erste Fahrdynamikparametersatz FP und der Kontextparametersatz KP werden von einem Fahrdynamikregelsystem des Fahrzeuges und/oder von der Rückhaltemittelauslöseeinheit bereitgestellt. Ein Beispiel für ein Fahrdynamikregelsystem ist das ESP-System. Ein Beispiel für die Rückhaltemittelauslöseeinheit ist ein Airbag-Steuersystem.

Mittels der bereitgestellten Gierrate $\omega_z$, des bereitgestellten ersten Fahrdynamikparametersatzes FP und des bereitgestellten Kontextparametersatzes KP wird die Auslöseentscheidung AE bestimmt. Das Bestimmen der Auslöseentscheidung AE kann beispielsweise regelbasiert, mittels Fuzzy-Logic oder mittels eines Neuronalen Netzes erfolgen. Beispielsweise wird die Auslöseentscheidung AE von einem Airbag-Steuersystem bestimmt. Beispiele für Rückhaltemittel sind Gurtstraffer, Überrollbügel, ausfahrbare Kopfstützen und/oder einer oder mehrere Airbags.

Die Bereitstellung der Gierrate $\omega_z$, des ersten Fahrdynamikparametersatzes FP und des Kontextparametersatzes KP erfolgt durch einen Datenbus des Fahrzeuges. Ein Beispiel für einen Datenbus innerhalb des Fahrzeuges ist der CAN-Bus.

Figur 2a zeigt ein schematisches Blockschaltbild des ersten Fahrdynamikparametersatzes. Der erste Fahrdynamikparametersatz FP weist eine Lateralbeschleunigung $a_y$ und eine Längsgeschwindigkeit $v_x$ des Kraftfahrzeuges auf.

Eine optionale Erweiterung des ersten Fahrdynamikparametersatzes FP, welche in Figur 2b gezeigt ist, weist weiter einen Lenkwinkel LW, eine Hochbeschleunigung $a_z$, eine Längsbeschleunigung $a_x$ und eine Wankrate $\omega_x$ des Kraftfahrzeuges auf

Vorzugsweise werden die Wankrate $\omega_x$, die Lateralbeschleunigung $a_y$, die Hochbeschleunigung $a_z$ und

die Längsbeschleunigung $a_x$ durch ein Airbag-Steuergerät bereitgestellt, während der Lenkwinkel LW und die Längsgeschwindigkeit $v_x$ von dem ESP-System des Fahrzeuges bereitgestellt werden. Des Weiteren kann die Lateralbeschleunigung $a_y$ und/oder die Längsbeschleunigung $a_x$ auch von dem ESP-System (ESP = Electronic Stability Program) oder einem anderen Fahrzeugdynamikregelsystem bereitgestellt werden. Der erste Fahrdynamikparametersatz FP kann noch weitere Parameter enthalten, beispielsweise weitere Daten aus dem ESP-System.

Figur 3 zeigt ein schematisches Blockschaltbild des Kontextparametersatzes. Der Kontextparametersatz KP weist jeweils einen Gewichtsparameter GeP, einen Größenparameter GrP und/oder einen Positionsparameter PP für einen jeden Fahrzeuginsassen auf. Diese Parameter werden von speziellen Sensoren erfasst und der Rückhaltemittelauslöseeinheit bereitgestellt. Der Kontextparametersatz KP kann weitere Parameter enthalten, beispielsweise können auch Parameter wie Art des Straßenbelags, Witterung etc. in dem Kontextparametersatz KP enthalten sein.

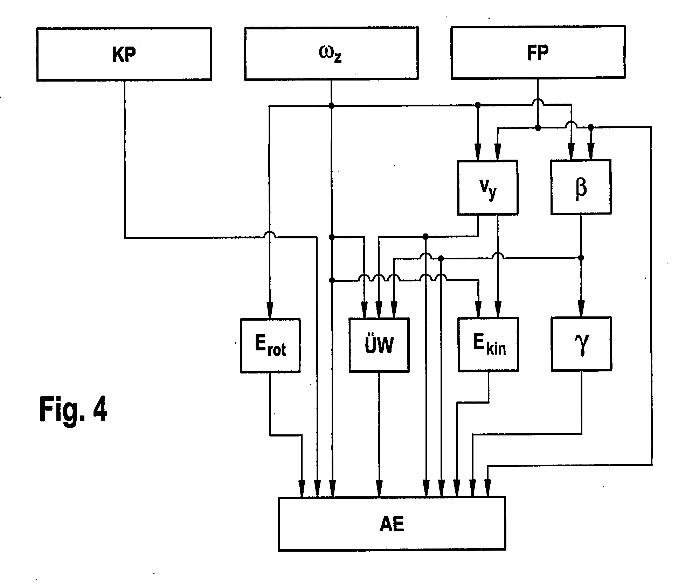

Figur 4 zeigt ein schematisches Blockschaltbild eines zweiten Ausführungsbeispiels zum erfindungsgemäßen Bestimmen einer Auslöseentscheidung für Rückhaltemittel. Analog zu Figur 1 werden der Kontextparametersatz KP, die Gierrate $\omega_z$ und der erste Fahrdynamikparametersatz FP bereitgestellt. Vorzugsweise weist der Kontextparametersatz KP die Parameter analog zu Figur 3 auf. Vorzugsweise weist der erste Fahrdynamikparametersatz FP die Parameter analog zu Figur 2a oder Figur 2b auf.

Mittels des ersten Fahrdynamikparametersatzes FP und der Gierrate $\omega_z$ wird eine Lateralgeschwindigkeit $v_y$ für das Fahrzeug berechnet. Weiter wird mittels der Gierrate $\omega_z$ und des ersten Fahrzeugparametersatzes FP der Schwimmwinkel $\beta$ berechnet. Weiter wird mittels der Gierrate $\omega_z$ die zur Verfügung stehende rotatorische Energie $E_{rot}$ berechnet. Mittels der Gierrate $\omega_z$ der Lateralgeschwindigkeit $v_y$ und des Schwimmwinkels $\beta$ wird die Überrollwahrscheinlichkeit ÜW für das Fahrzeug berechnet. Mittels der Gierrate $\omega_z$ und der Lateralgeschwindigkeit $v_y$ wird die zur Verfügung stehende kinetische Energie $E_{kin}$, des Fahrzeugs berechnet.

Mittels des Schwimmwinkels $\beta$ wird der Eintrittswinkel $\gamma$ berechnet. Der Eintrittswinkel $\gamma$ definiert den Eintritt des Fahrzeuges von einem ersten Untergrund, beispielsweise der Strasse, in einen zweiten Untergrund, beispielsweise den Seitenstreifen. Der Eintrittswinkel $\gamma$ berechnet sich:

$$\gamma = 90° - \beta$$

Mittels des Kontextparametersatzes KP, der rotatorischen Energie $E_{rot}$, der kinetischen Energie $E_{kin}$, der Gierrate $\omega_z$, der Überrollwahrscheinlichkeit ÜW, der Lateralgeschwindigkeit $v_y$, des Schwimmwinkels $\beta$, des Eintrittswinkels $\gamma$ und des ersten Fahrdynamikparametersatzes FP wird die Auslöseentscheidung AE für Rückhaltemittel des Fahrzeuges berechnet. Vorzugsweise wird die Berechnung der Auslöseentscheidung mittels eines Airbag-Steuersystems durchgeführt.

Die Gierrate $\omega_z$, der erste Fahrdynamikparametersatz FP, der Kontextparametersatz KP, der Schwimmwinkel $\beta$, der Eintrittswinkel $\gamma$, die Lateralgeschwindigkeit $v_y$ und die Überrollwahrscheinlichkeit ÜW werden mittels eines Datenbusses, vorzugsweise des CAN-Busses, innerhalb des Fahrzeuges für eine Rückhaltemittelauslöseeinheit bereitgestellt. Die Rückhaltemittelauslöseeinheit, vorzugsweise ein Airbag-Steuersystem, bestimmt die Auslöseentscheidung und löst damit Rückhaltemittel, beispielsweise Airbags, aus.

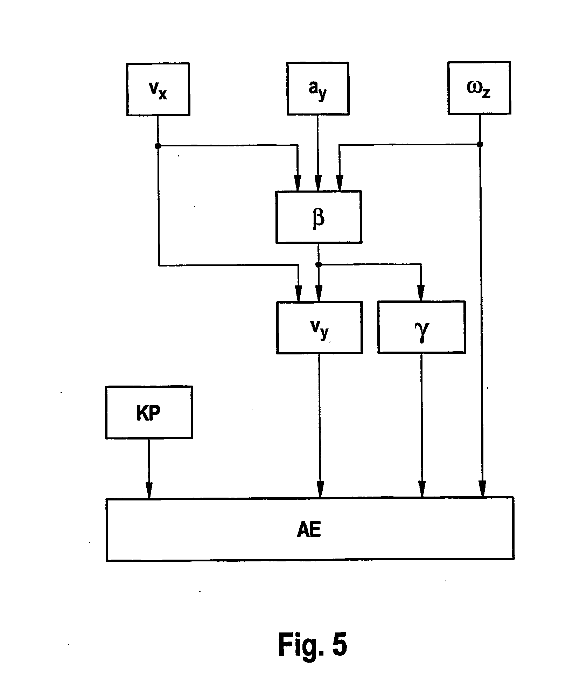

Figur 5 zeigt ein schematisches Blockschaltbild eines dritten Ausführungsbeispiels zum erfindungsgemäßen Bestimmen einer Auslöseentscheidung für Rückhaltemittel. Eine Längsgeschwindigkeit $v_x$ und eine Lateralbeschleunigung $a_y$, welche zu dem ersten Fahrdynamikparametersatz FP zu zählen sind, werden neben der Gierrate $\omega_z$ bereitgestellt. Der Schwimmwinkel $\beta$ wird mittels der Längsgeschwindigkeit $v_x$, der Lateralgeschwindigkeit $a_y$ und der Gierrate $\omega_z$ berechnet.

Die Lateralgeschwindigkeit $v_y$ wird mittels der Längsgeschwindigkeit $v_x$ und des Schwimmwinkels $\beta$ berechnet. Der Eintrittswinkel $\gamma$ wird mittels des Schwimmwinkels $\beta$ berechnet, wobei der Eintrittswinkel $\gamma$, wie oben bereits erläutert, durch die Differenz zwischen 90° und des Schwimmwinkels $\beta$ definiert ist. Mittels des Kontextparametersatzes KP, der Lateralgeschwindigkeit $v_y$, des Eintritiswinkels $\gamma$ und der Gierrate $\omega_z$ wird die Auslöseentscheidung AE berechnet.

Obwohl die vorliegende Erfindung vorstehend anhand bevorzugter Ausführungsbeispiele beschrieben wurde, ist sie darauf nicht beschränkt, sondern auf vielfältige Weise modifizierbar. So ist im

Besonderen die Auswahl der ersten Fahrdynamikparameter als auch die Auswahl der Kontextparameter um weitere Parameter erweiterbar.

**Patentansprüche**

1. Verfahren zur Bestimmung einer Auslöseentscheidung (AE) für Rückhaltemittel eines Kraftfahrzeuges bei einem vorangegangenem Schleudermanöver mit den Schritten:

    - Bereitstellen einer Gierrate ($\omega$□z), eines ersten Fahrdynamikparametersatzes (FP) und eines Kontextparametersatzes (KP); und
    - Bestimmen der Auslöseentscheidung (AE) mittels der Gierrate ($\omega$□z), des ersten Fahrdynamikparametersatzes (FP) und des Kontextparametersatzes (KP)
    **dadurch gekennzeichnet,**

    **dass** zum Bestimmen der Auslöseentscheidung (AE) weiter ein Eintrittswinkel ($\gamma$□) bereitgestellt und verwendet wird, welcher den Eintritt des Fahrzeuges von einem ersten Untergrund in einen zweiten Untergrund während des Schleudervorgangs festlegt und welcher mittels eines Schwimmwinkels ($\beta$□) berechnet wird.

2. Verfahren nach Anspruch 1,
   **dadurch gekennzeichnet,**
   **dass** der erste Fahrdynamikparametersatz (FP) eine Lateralbeschleunigung (ay) und eine Längsgeschwindigkeit (vx) des Kraftfahrzeuges aufweist.

3. Verfahren nach Anspruch 2,
   **dadurch gekennzeichnet,**
   **dass** der erste Fahrdynamikparametersatz (FP) weiter einen Lenkwinkel (LW), eine Längsbeschleunigung (ax), eine Hochbeschleunigung (az) und eine Wankrate (□x) des Kraftfahrzeuges aufweist.

4. Verfahren nach Anspruch 1,
   **dadurch gekennzeichnet,**
   **dass** der Kontextparametersatz (KP) jeweils einen Gewichtsparameter (GeP), einen Größenparameter (GrP) und/oder einen Positionsparameter (PP) für einen jeden Fahrzeuginsassen aufweist.

5. Verfahren nach Anspruch 1,
   **dadurch gekennzeichnet,**
   **dass** zum Bestimmen der Auslöseentscheidung (AE) weiter ein Schwimmwinkel (□) bereitgestellt und verwendet wird.

6. Verfahren nach einem oder mehreren der vorstehenden Ansprüche, **dadurch gekennzeichnet,**
   **dass** der Schwimmwinkel ($\beta$□) mitells des ersten Fahrdynamikparametersatzes (FP) berechnet wird oder als gemessener Parameter zur Verfügung steht.

7. Verfahren nach einem oder mehreren der vorstehenden Ansprüche, **dadurch gekennzeichnet,**
   **dass** zum Bestimmen der Auslöseentscheidung (AE) weiter eine Lateralgeschwindigkeit (vy) bereitgestellt und verwendet wird, welche mittels des ersten Fahrdynamikparametersatzes (FP) berechnet wird oder als gemessener Parameter zur Verfügung steht.

8. Verfahren nach einem oder mehreren der vorstehenden Ansprüche, **dadurch gekennzeichnet,**
   **dass** zum Bestimmen der Auslöseentscheidung (AE) eine Überrollwahrscheinlich-keit (ÜW) für das Kraftfahrzeug bereitgestellt und verwendet wird, welche mittels der Gierrate ($\omega$□z), der Lateralgeschwindigkeit (vy) und des Schwimmwinkels ($\beta$□) be-rechnet wird.

**9.** Verfahren nach einem oder mehreren der vorstehenden Ansprüche, **dadurch gekennzeichnet, dass** die Gierrate ($\square$z), der erste Fahrdynamikparametersatz (FP), der Kontextparametersatz (KP), der Schwimmwinkel ($\beta\square$), der Eintrittswinkel ($\gamma\square$), die Lateralgeschwindigkeit (vy) und die Überrollwahrscheinlichkeit (ÜW) mittels eines Datenbusses innerhalb des Fahrzeuges für eine Rückhaltemittelauslöseeinheit bereitgestellt werden, welche die Auslöseentscheidung (AE) bestimmt und damit Rückhaltemittel auslöst.

**10.** Verfahren nach einem oder mehreren der vorstehenden Ansprüche, **dadurch gekennzeichnet, dass** wenigstens eines der Rückhaltemittel, Gurtstraffer, Überrollbügel, ausfahrba-re Kopfstützen und/oder einer oder mehrere Airbags, von der Rückhaltemittelaus-löseeinheit mittels der bestimmten Auslöseentscheidung (AE) ausgelöst wird.

**11.** Verfahren nach einem oder mehreren der vorstehenden Ansprüche, **dadurch gekennzeichnet, dass** das Bestimmen der Auslöseentscheidung (AE) mittels des Kontextparametersatzes (KP), der Lateralgeschwindigkeit (vy), des Eintrittswinkels ($\gamma\square$) und der Gierrate ($\omega\square$z) durchgeführt wird.

**Claims**

**1.** Method for determining a decision (AE) for triggering restraint means of a motor vehicle during a preceding skidding manoeuvre, having the steps:

- provision of a yaw rate ($\omega$z) of a first vehicle dynamics parameter set (FP) and of a context parameter set (KP); and
- determination of the triggering decision (AE) by means of the yaw rate ($\omega$z) of the first vehicle dynamics parameter set (FP) and of the context parameter set (KP),
**characterized**
**in that** for the determination of the triggering decision (AE) an incident angle ($\gamma$) is also made available and used, which incident angle ($\gamma$) defines the incidence of the vehicle from a first underlying surface to a second underlying surface during the skidding process and is calculated by means of an attitude angle ($\beta$).

**2.** Method according to Claim 1,
**characterized**
**in that** the first vehicle dynamics parameter set (FP) has a lateral acceleration (ay) and a longitudinal speed (vx) of the motor vehicle.

**3.** Method according to Claim 2,
**characterized**
**in that** the first vehicle dynamics parameter set (FP) also has a steering angle (LW), a longitudinal acceleration (ax), a vertical acceleration (az) and a rolling rate ($\omega_x$) of the motor vehicle.

**4.** Method according to Claim 1,
**characterized**
**in that** the context parameter set (KP) has in each case a weighting parameter (GeP), a size parameter (GrP) and/or a position parameter (PP) for each vehicle occupant.

**5.** Method according to Claim 1,
**characterized**
**in that** for the determination of the triggering decision (AE) an attitude angle ($\beta$) is also made available and used.

**6.** Method according to one or more of the preceding claims,
**characterized**
**in that** the attitude angle ($\beta$) is calculated by means of the first vehicle dynamics parameter set (FP) or is available as a measured parameter.

**7.** Method according to one or more of the preceding claims,
**characterized**
**in that** for the determination of the triggering decision (AE) a lateral speed (vy) is also made available and used, which lateral speed (vy) is calculated by means of the first vehicle dynamics parameter set (FP) or is available as a measured parameter.

**8.** Method according to one or more of the preceding claims,
**characterized**
**in that** for the determination of the triggering decision (AE) a roll-over probability (ÜW) for the motor vehicle is made available and used, which roll-over probability (ÜW) is calculated by means of the yaw rate ($\omega$z), the lateral speed (vy) and the attitude angle ($\beta$).

**9.** Method according to one or more of the preceding claims,
**characterized**
**in that** the yaw rate ($\omega$z), the first vehicle dynamics parameter set (FP), the context parameter set (KP), the attitude angle ($\beta$), the incident angle ($\gamma$), the lateral speed (vy) and the roll-over probability (ÜW) are made available by means of a data bus within the vehicle for a restraint means triggering unit which determines the triggering decision (AE) and therefore triggers restraint means.

**10.** Method according to one or more of the preceding claims,

**characterized**

**in that** at least one of the restraint means comprising seat-belt pretensioners, roll-over bars, extendable headrests and/or one or more airbags is triggered by the restraining means triggering unit by means of the determined triggering decision (AE).

11. Method according to one or more of the preceding claims,
**characterized**

**in that** the determination of the triggering decision (AE) is made by means of the context parameter set (KP), the lateral speed (vy), the incident angle (γ) and the yaw rate (wz).


**Revendications**

1. Procédé de prise de décision de déclenchement (AE) d'un moyen de retenue d'un véhicule automobile lors d'une manoeuvre de dérapage précédente, comprenant les étapes suivantes :

   - mise à disposition d'un taux de lacet (z), d'un premier jeu de paramètres de dynamique de conduite (FP) et d'un jeu de paramètres contextuel (KP) ; et
   - prise de la décision de déclenchement (AE) à l'aide du taux de lacet (ωz), du premier jeu de paramètres de dynamique de conduite (FP) et du jeu de paramètres contextuel (KP) ;
   **caractérisé en ce que** pour prendre la décision de déclenchement (AE), on met à disposition et on utilise en sus un angle d'attaque (γ) établissant la position du véhicule lorsqu'il passe d'un premier type de sol à un deuxième type de sol pendant le processus de dérapage, cet angle étant calculé à l'aide d'un angle de dérive (β).

2. Procédé selon la revendication 1, **caractérisé en ce que** le premier jeu de paramètres de dynamique de conduite (FP) comporte une accélération latérale (ay) et une vitesse longitudinale (vx) du véhicule automobile.

3. Procédé selon la revendication 2, **caractérisé en ce que** le premier jeu de paramètres de dynamique de conduite (FP) comporte en sus un angle de direction (LW), une accélération longitudinale (ax), une accélération en hauteur (az) et un taux de roulis (ωx) du véhicule automobile. (ωx)

4. Procédé selon la revendication 1, **caractérisé en ce que** le jeu de paramètres contextuel (KP) comporte respectivement un paramètre de poids (GeP), un paramètre de taille (GrP) et/ou un paramètre de position (PP) pour chacun des occupants du véhicule.

5. Procédé selon la revendication 1, **caractérisé en ce qu'**un angle de dérive (β) est mis à disposition et utilisé pour la prise de décision de déclenchement (AE).

6. Procédé selon l'une quelconque des revendications précédentes ou plusieurs d'entre elles, **caractérisé en ce que** l'angle de dérive (β) est calculé à l'aide du premier jeu de paramètres de dynamique de conduite (FP) ou mis à disposition sous la forme d'un paramètre mesuré.

7. Procédé selon l'une quelconque des revendications précédentes ou plusieurs d'entre elles, **caractérisé en ce qu'**on met à disposition et qu'on utilise en outre pour la prise de décision de déclenchement (AE) une vitesse latérale (vy) calculée à l'aide du premier jeu de paramètres de dynamique de conduite (FP) ou mise à disposition sous la forme d'un paramètre mesuré.

8. Procédé selon l'une quelconque des revendications précédentes ou plusieurs d'entre elles, **caractérisé en ce qu'**on met à disposition et qu'on utilise une probabilité de renversement (ÜW) du véhicule automobile pour prendre la décision de déclenchement (AE), ladite probabilité étant calculée à l'aide du taux de lacet (ωz), de la vitesse latérale (vy) et de l'angle de dérive (β).

9. Procédé selon l'une quelconque des revendications précédentes ou plusieurs d'entre elles, **caractérisé en ce que** le taux de lacet (z), le premier jeu de paramètres de dynamique de conduite (FP), le jeu de paramètres contextuel (KP), l'angle de dérive (β), l'angle d'attaque (γ), la vitesse latérale (vy) et la probabilité de renversement (ÜW) sont mis à disposition à l'aide d'un bus de données prévu à l'intérieur du véhicule pour une unité de déclenchement de retenue, ladite unité prenant la décision du déclenchement (AE) et déclenchant ainsi le moyen de retenue.

10. Procédé selon l'une quelconque des revendications précédentes ou plusieurs d'entre elles, **caractérisé en ce qu'**au moins un élément parmi le moyen de retenue, le rétracteur de ceinture de sécurité, l'étrier de roulis, l'appuie-tête réglable et/ou un ou plusieurs airbags est déclenché par l'unité de déclenchement de retenue par le biais de la prise de décision de déclenchement (AE) déterminée.

11. Procédé selon l'une quelconque des revendications précédentes ou plusieurs d'entre elles, **caractérisé en ce que** la décision de déclenchement (AE) est prise à l'aide du jeu de paramètres contextuel (KP), de la vitesse latérale (vy), de l'angle d'attaque (γ) et du taux de lacet (ωz).

**Fig. 1**

$\omega_z$     FP     KP

AE

**Fig. 2a**

$v_x$     $a_y$

FP

**Fig. 2b**

$v_x$   $a_y$   LW   $\omega_x$   $a_x$   $a_z$

FP

**Fig. 3**

GeP     GrP     PP

KP

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10149112 A1
- EP 1002709 A2